# EUROPEAN PATENT APPLICATION

(11) **EP 3 486 298 A1**
(43) Date of publication of application: **22.05.2019**
(21) Application number: 17843807.3
(22) Date of filing: 05.07.2017
(51) Int. Cl.: C09K 11/02, C01G 23/047, C01F 7/02, C01G 9/02, G02F 1/017

(54) **QUANTUM DOT COMPOSITION, METHOD FOR MANUFACTURING SAME, AND APPARATUS USING SAME**

(30) Priority: 23.08.2016 KR 20160106831
(71) Applicant: Samsung Electronics Co., Ltd., Suwon-si, Gyeonggi-do 16677 (KR)
(72) Inventor: CHO, Jin Hyun, Seoul 06005 (KR); KIM, Jin Soo, Seoul 06661 (KR)
(74) Representative: Appleyard Lees IP LLP
(86) International application number: PCT/KR2017/007150
(87) International publication number: WO 2018/038387

(57) **Abstract**

An aspect provides a quantum dot composition including metal oxide having a structure in which quantum dots are impregnated in pores formed in the surface, a method of preparing the quantum dot composition, and a device using the quantum dot composition. The quantum dot composition according to an embodiment may include a metal oxide composite, wherein quantum dots may be impregnated in pores formed in the surface of the metal oxide composite, wherein the metal oxide composite may have a size of a Mie scattering range with respect to blue light.

## Description

### [Technical Field]

The present disclosure relates to a quantum dot composition in which quantum dots are applied to a random raising composite with a maximized barrier property, a preparation method thereof, and a device using the composition.

### [Background Art]

A Liquid Crystal Display (LCD) is a device that converts various electrical information generated from various devices to visual information by using changes in transmittance of liquid crystal according to applied voltages and transmits the visual information.

The LCD is widely used since it has low consumption power and can be implemented as a lightweight, thin device. However, the LCD is poor in view of color reproduction property and total brightness property. Recently, a technique of using a Quantum Dot (QD) device to improve the color reproduction property and brightness property of LCD has been proposed.

The QD device can be applied to a LCD by a method of applying a quantum dot material in the insides of blue light-emitting device packages, a method of inserting a tube type quantum dot device into an edge type LCD, a method of disposing a sheet type quantum dot device on a light guide plate, etc.

However, the quantum dot devices applied to the above-described methods are vulnerable to oxygen and water, and accordingly, they need to use a special barrier film. Meanwhile, in order to overcome the problem, a method of coating quantum dots with silica has been developed. However, when quantum dots are coated with silica, the efficiency of the quantum dots deteriorates. Also, since the size of a quantum dot is within the range of 1% of a visible light wavelength, a large number of quantum dots need to be used to increase the portion of quantum dots that are excited by light-emitting devices.

### [Disclosure]

### [Technical Problem]

One aspect of the present disclosure is directed to providing a quantum dot composition including metal oxide having a structure in which quantum dots are impregnated in pores formed in the surface, a method of preparing the quantum dot composition, and a device using the quantum dot composition.

Further, the present disclosure is directed to providing a quantum dot composition in which metal oxide has a size of a Mie scattering range with respect to blue light, a method of preparing the quantum dot composition, and a device using the quantum dot composition.

Furthermore, the present disclosure is directed to providing a quantum dot composition in which coating films are formed on the surfaces of quantum dots impregnated in the pores of metal oxide, a method of preparing the quantum dot composition, and a device using the quantum dot composition.

### [Technical Solution]

One aspect of the present disclosure provides a quantum dot composition including a metal oxide composite, wherein quantum dots are impregnated in pores formed in a surface of the metal oxide composite, wherein the metal oxide composite has a size of a Mie scattering range with respect to blue light.

Also, the metal oxide composite may have a size of 100 nm to 1000 nm.

Also, the metal oxide composite may include at least one metal oxide selected from among a metal oxide group including titanium oxide (TiO₂), aluminum oxide (Al₂O₃), zinc oxide (ZnO), silicon dioxide (SiO₂), chrome oxide (CrO), zirconium oxide (ZrO₂), iron oxide (Fe₃O₄), calcium oxide (CaO), tungsten dioxide (WO₂), tellurium dioxide (TeO₂), magnesium oxide (MgO), tin oxide (SnO), titanium oxide (TiO), zinc oxide (Ag₂O), cobalt oxide (CoO), nickel oxide (NiO), and aluminum oxide (AlO).

Also, polymer coating films may be formed on surfaces of the quantum dots.

Also, the pores of the metal oxide composite may have a volume ratio of 5 to 65 with respect to a total volume of the metal oxide composite.

Also, the pores of the metal oxide composite may have an average diameter of 10 nm to 800 nm.

Also, the quantum dots impregnated in the pores of the metal oxide composite may have a portion of 0.5 weight% to 65 weight% with respect to 100 weight% of a total matrix.

Also, the quantum dot composition may be formed by preparing a metal oxide composite with pores formed in the surface, coating the quantum dots, impregnating the coated quantum dots in the pores of the metal oxide composite, and coating the metal oxide composite.

Another aspect of the present disclosure provides a method of forming a quantum dot composition, including: preparing a metal oxide composite with pores formed in the surface; coating quantum dots; impregnating the coated quantum dots in the pores of the metal oxide composite; and coating the metal oxide composite.

Also, the preparing of the metal oxide composite with the pores formed in the surface may include preparing a metal oxide composite having a size of a Mie scattering range with respect to blue light.

Also, the preparing of the metal oxide composite with the pores formed in the surface may include preparing a metal oxide composite having an average diameter of 100 nm to 1000 nm.

Also, the preparing of the metal oxide composite with the pores formed in the surface may include preparing a metal oxide composite made of at least one metal oxide selected from among a metal oxide group including titanium oxide (TiO₂), aluminum oxide (Al₂O₃), zinc oxide (ZnO), silicon dioxide (SiO₂), chrome oxide (CrO), zirconium oxide (ZrO₂), iron oxide (Fe₃O₄), calcium oxide (CaO), tungsten dioxide (WO₂), tellurium dioxide (TeO₂), magnesium oxide (MgO), tin oxide (SnO), titanium oxide (TiO), zinc oxide (Ag₂O), cobalt oxide (CoO), nickel oxide (NiO), and aluminum oxide (AlO).

Also, the coating of the quantum dots may include providing the quantum dots in an organic solvent including polymers to form polymer coating films on surfaces of the quantum dots.

Also, the impregnating of the coated quantum dots in the pores of the metal oxide composite may include adding the coated quantum dots and the metal oxide composite in a pre-prepared solvent and stirring the solvent.

Also, the method may further include drying the solvent to collect the metal oxide composite in which the quantum dots are impregnated.

Also, the coating of the metal oxide composite may include: forming an organic coating film on a surface of oxide powder; and forming an inorganic coating film on the surface of the oxide powder on which the organic coating film is formed.

Another aspect of the present disclosure provides a display apparatus to which the quantum dot composition is applied.

Also, the display apparatus may include: a backlight unit, wherein the quantum dot composition is applied to a light guide plate pattern of the backlight unit.

Also, the display apparatus may include a sheet on which the quantum dot composition is coated.

### [Advantageous Effects]

The quantum dot composition, the preparation method thereof, and the device using the quantum dot composition, according to an aspect, can expect the following effects.

First, by using a quantum dot composition of a random raising structure with a maximized barrier property, it may be possible to improve the efficiency of the device, while reducing the quantity of used quantum dots.

Further, since no barrier film is used, an effect of cost reduction can be obtained.

### [Description of Drawings]

FIG. 1 is a SEM image of a sheet type aluminum oxide (Al₂O₃) composition having nano-sized pores.
FIG. 2 is a SEM image obtained after the aluminum oxide (Al₂O₃) composition of FIG. 1 is ball milled to sizes of several hundreds of nanometers to several micrometers.
FIG. 3 is a flowchart illustrating a process of preparing a quantum dot composition according to an embodiment.
FIG. 4 is a schematic view showing a flow of a process of preparing a quantum dot composition according to an embodiment.
FIG. 5 shows a configuration of a display apparatus according to an embodiment.
FIG. 6 shows optical wavelength conversion experiment results of blue light.

### [Modes of the Invention]

Like reference numerals will refer to like components throughout this specification. This specification does not describe all components of the embodiments, and general information in the technical field to which the present disclosure belongs or overlapping information between the embodiments will not be described.

Also, it will be understood that when a certain part "includes" a certain component, the part does not exclude another component but can further include another component, unless the context clearly dictates otherwise.

As used herein, the singular forms "a", "an" and "the" are intended to include the plural forms as well, unless the context clearly indicates otherwise.

Reference numerals used in operations are provided for convenience of description, without describing the order of the operations, and the operations can be executed in a different order from the stated order unless a specific order is definitely specified in the context.

Hereinafter, the embodiments of the present disclosure will be described with reference to the accompanying drawings.

A quantum dot composition according to the present disclosure may include a metal oxide composite, wherein quantum dots are impregnated in pores formed in a surface of the metal oxide composite.

The metal oxide composite may be provided in the form of a random raising nano-micro composite. Hereinafter, in the present specification, a nano-micro composite means a composite with a nano- or micro-scale diameter, and the term "composite" may mean a nano-micro composition unless the context clearly dictates otherwise.

The metal oxide composite may have a diameter of 100 nm to 1000 nm. The diameter of the metal oxide may be calculated based on Mie scattering theory, and the diameter of the metal oxide may be calculated as a diameter of a Mie scattering range with respect to blue light.

Mie scattering, which is a theory about the scattering property of light when the wavelength of light is similar to the size of particles causing scattering, is that light is scattered to a degree similar to that of particles causing scattering when the wavelength of the light is similar to the size of the particles.

In the present disclosure, a metal oxide composite having a λ/4 to 2λ times diameter with respect to blue light having a wavelength range of about 400 nm to about 500 nm may be used to prepare a quantum dot composition. The present disclosure may provide a quantum dot composition by using the metal oxide composite having the diameter, thereby providing a display apparatus with improved optical efficiency.

In the surface of the metal oxide composite, nano-sized pores may be formed. The pores of the metal oxide composite may have an average diameter of 10 nm to 800 nm. Also, the pores of the metal oxide composite may have a volume ratio of 5 to 65 with respect to a total volume of the metal oxide composite. Therefore, the quantum dots impregnated in the pores of the metal oxide composite may have a portion of 0.5 weight% to 65 weight% with respect to 100 weight% of a total matrix.

In the pores of the metal oxide composite, the quantum dots may be impregnated. However, when the sizes of the pores are excessively large or when a ratio of the volume of the pores with respect to the total volume of the metal oxide composite is high, intervals between the quantum dots impregnated in the pores of the metal oxide composite may become narrow, which may make the performance expression of the quantum dots difficult. Meanwhile, when the sizes of the pores are excessively small or when a ratio of the volume of the pores with respect to the total volume of the metal oxide composite is low, an absolute quantity of quantum dots that can be impregnated in the pores of the metal oxide composite may be reduced, which may also make the performance expression of the quantum dots difficult. Therefore, it may be necessary to appropriately adjust the sizes of pores formed in the surface of the metal oxide composite and a ratio of the volume of pores with respect to the total volume of the metal oxide composite.

The metal oxide may be at least one selected from among a metal oxide group including titanium oxide (TiO₂), aluminum oxide (Al₂O₃), zinc oxide (ZnO), silicon dioxide (SiO₂), chrome oxide (CrO), zirconium oxide (ZrO₂), iron oxide (Fe₃O₄), calcium oxide (CaO), tungsten dioxide (WO₂), tellurium dioxide (TeO₂), magnesium oxide (MgO), tin oxide (SnO), titanium oxide (TiO), zinc oxide (Ag₂O), cobalt oxide (CoO), nickel oxide (NiO), and aluminum oxide (AlO), although not limited to the above-mentioned examples.

The metal oxide composite may be prepared by ball milling a sheet type metal oxide composite to sizes of several hundreds of nanometers to several micrometers.

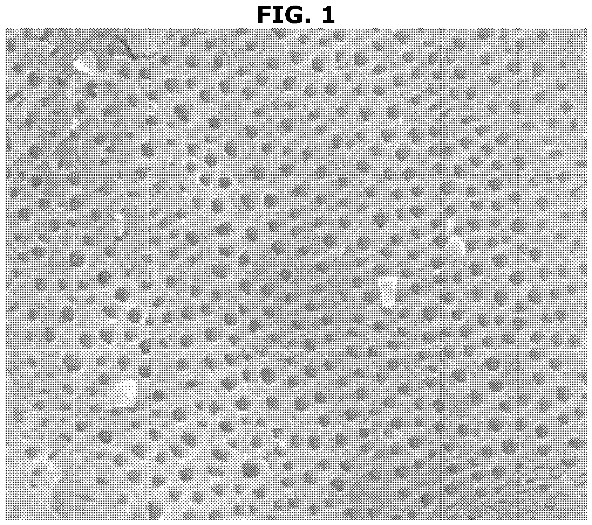

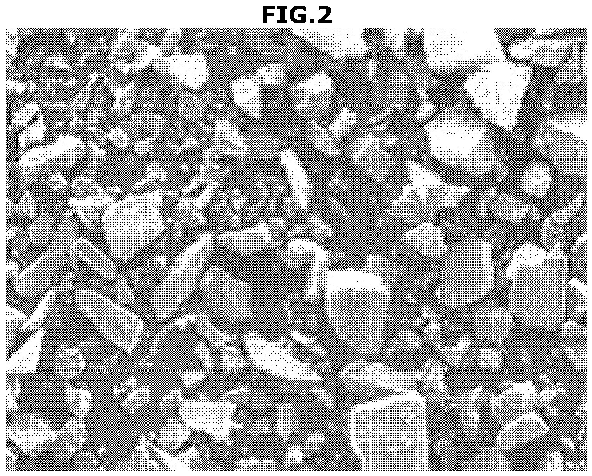

FIGS. 1 and 2 are SEM images obtained after a sheet type aluminum oxide (Al₂O₃) composite having nano-sized pores is ball milled to sizes of several hundreds of nanometers to several micrometers.

In detail, FIG. 1 is an image of the surface of a sheet type aluminum oxide composite. It can be seen from FIG. 1 that a large number of nano-sized pores are formed in the surface of the aluminum oxide composite. FIG. 2 is an image of a sheet type aluminum oxide (Al₂O₃) composite after the aluminum oxide composite is ball milled to sizes of several hundreds of nanometers to several micrometers, wherein the surface of the ball-milled aluminum oxide composite includes a large number of nano-sized pores. A method of preparing the metal oxide composite, according to the present disclosure, is not limited to the ball milling method, and various modifications may be possible within a technical scope that can be easily conducted by one of ordinary skill in the art.

In the insides of the pores of the metal oxide composite, quantum dots may be provided. Polymer coating films may be formed on the surfaces of the quantum dots. For example, the quantum dots may be coated by mixing polymers as a main ingredient of coating films in an organic solvent allowing quantum dot dispersion to prepare a polymer organic solvent and mixing quantum dots in the polymer organic solvent.

The organic solvent may be a solvent, such as toluene, hexane, chloroform, n-octane, or the like, and the polymers may be PMMA-co-MMA, PS-b-P(S-r-4HS), P(S-r-4VR)-b-PMMA, PS-b-PFS, poly(vinylsilazane)-block-polystyrene, polynorbornene-block-polynorbornenedecaborane), or the like. However, examples of a usable organic solvent and polymers are not limited to the above-mentioned materials.

The present disclosure may improve durability of particles against light and water by accommodating quantum dots with polymer coating films in the insides of pores of a metal oxide composite. Also, in a process of coating oxide powder, which will be described later, an acidic solvent may be generally used, and the quantum dots may be protected by coating films formed on the surfaces of the quantum dots during the coating process.

So far, the ingredients of the quantum dot composition have been described. Hereinafter, for easy understanding, a method of preparing the quantum dot composition will be described in more detail.

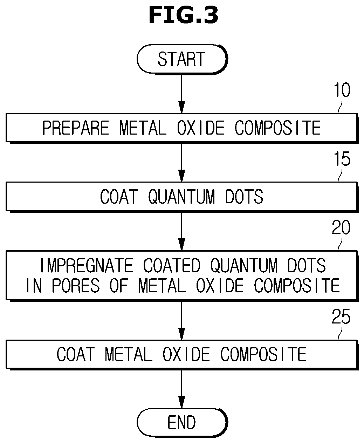

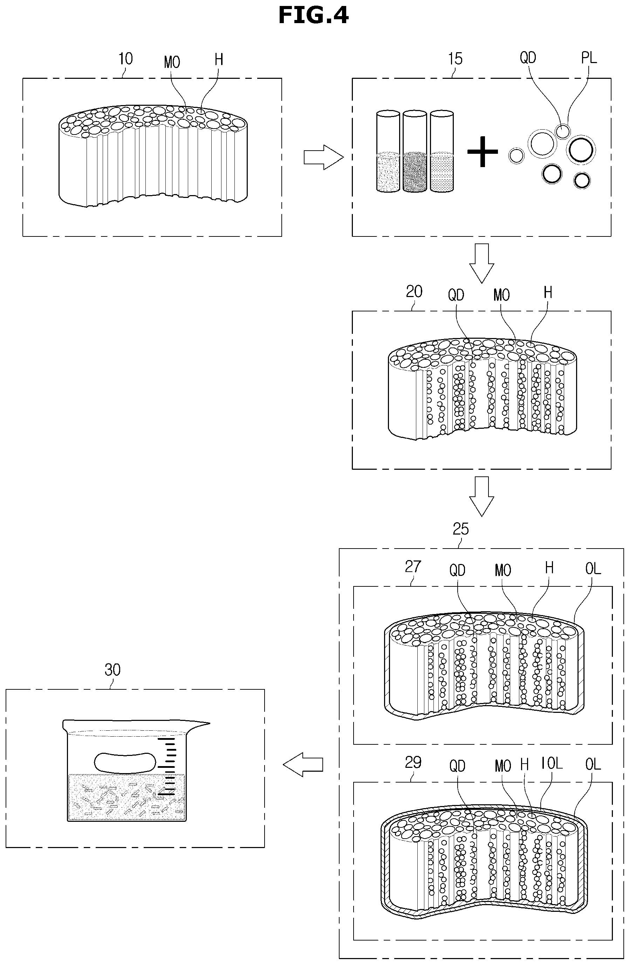

FIG. 3 is a flowchart illustrating a process of preparing a quantum dot composition according to an embodiment, and FIG. 4 is a schematic view showing a flow of a process of preparing a quantum dot composition according to an embodiment.

As shown in FIGS. 3 and 4, a process of preparing a quantum dot composition according to an embodiment may include: operation 10 of preparing a metal oxide composite MO with pores H formed in the surface; operation 15 of coating quantum dots QD; operation 20 of impregnating the coated quantum dots QD into the pores H of the metal oxide composite MO; and operation 25 of coating the metal oxide composite MO.

First, operation 10 of preparing the metal oxide composite MO may be performed. The metal oxide composite MO may be provided in the form of a random raising nano-micro composition. For this, the metal oxide composite MO may have a diameter of 100 nm to 1000 nm. The diameter of the metal oxide may be calculated based on the Mie scattering theory, and calculated as a diameter of a Mie scattering range with respect to blue light. Hereinafter, overlapping descriptions thereof will be omitted.

Operation 10 of preparing the metal oxide composite MO may include operation of preparing a metal oxide composite MO made of at least one metal oxide selected from among a metal oxide group including titanium oxide (TiO₂), aluminum oxide (Al₂O₃), zinc oxide (ZnO), silicon dioxide (SiO₂), chrome oxide (CrO), zirconium oxide (ZrO₂), iron oxide (Fe₃O₄), calcium oxide (CaO), tungsten dioxide (WO₂), tellurium dioxide (TeO₂), magnesium oxide (MgO), tin oxide (SnO), titanium oxide (TiO), zinc oxide (Ag₂O), cobalt oxide (CoO), nickel oxide (NiO), and aluminum oxide (AlO). However, examples of usable metal oxide are not limited to the above-mentioned materials.

Then, operation 15 of coating quantum dots QD will be performed. Operation 15 of coating quantum dots QD may include operation of providing quantum dots QD in an organic solvent including polymers to form polymer coating films PL on the surfaces of the quantum dots QD. More specifically, by mixing polymers as a main ingredient of coating films PL in an organic solvent allowing quantum dot dispersion to prepare a polymer organic solvent and providing quantum dots QD in the polymer organic solvent, polymer coating films PL may be formed on the surfaces of the quantum dots QD.

The organic solvent may be a solvent, such as toluene, hexane, chloroform, n-octane, or the like, and the polymers may be PMMA-co-MMA, PS-b-P(S-r-4HS), P(S-r-4VP)-b-PMMA, PS-b-PFS, poly(vinylsilazane)-block-polystyrene, polynorbornene-block-polynorbornenedecaborane, or the like. However, examples of a usable organic solvent and polymers are not limited to the above-mentioned materials.

Then, operation 20 of impregnating the coated quantum dots QD in the pores H of the metal oxide composite MO may be performed. Operation 20 may be performed by adding the coated quantum dots QD and the metal oxide composite MO in a solvent prepared in advance and then stirring the solvent. After the stirring is completed, the solvent may be dried to collect a metal oxide composite MO in which the quantum dots QD are impregnated. In the current embodiment, the metal oxide composite MO may be collected in the form of powder.

Thereafter, operation 25 of coating the metal oxide composite MO may be performed.

Operation 25 of coating the metal oxide composite MO may include operation 27 of forming an organic coating film OL on the metal oxide composite MO and operation 29 of forming an inorganic coating film IOL on the surface of the metal oxide composite MO on which the organic coating film OL is formed.

For example, operation 27 of forming the organic coating film OL on the surface of the metal oxide composite MO may include operation of mixing polymers as a main ingredient of a coating film OL in an organic solvent to prepare a polymer organic solvent, and providing the metal oxide composite MO in the polymer organic solvent. In the current embodiment, polymers such as PS-PE0 block copolymers may be used. However, examples of usable polymers are not limited to this.

Successively, operation of again dispersing the metal oxide composite MO with the organic coating film OL formed on the surface in the solvent, and reacting silica precursors with the solvent to form an inorganic coating film IOL on the surface of the metal oxide composite MO may be performed.

In the above-described embodiment, a case of forming both the organic coating film OL and the inorganic coating film IOL has been described as an example. However, a method of coating the metal oxide composite MO is not limited to the above-described example. For example, one of the organic coating film OL and the inorganic coating film IOL may be formed, and according to some embodiments, a plurality of organic coating films or a plurality of inorganic coating films may be formed.

After operation of forming the coating film on the surface of the metal oxide composite MO is completed, the metal oxide composite MO with the coating film may be dispersed in a solvent to acquire a quantum dot composition in a colloid form (operation 30).

So far, the embodiments of the quantum dot composition and the method of preparing the quantum dot composition have been described. The quantum dot composition prepared by the above-described method may be applied to a display apparatus. More specifically, the quantum dot composition may be used as pattern ink for forming a pattern on a light guide plate of a backlight unit of a display apparatus, and may be coated on a reflector member of the display apparatus. Also, the quantum dot composition may be applied to a quantum dot filter disposed on the front surface of a light emitting module of an edge type display, in such a way to be applied on an optical lens of the light emitting module.

Hereinafter, for easy understanding, a method of applying the quantum dot composition according to the present disclosure to a display apparatus will be described in detail.

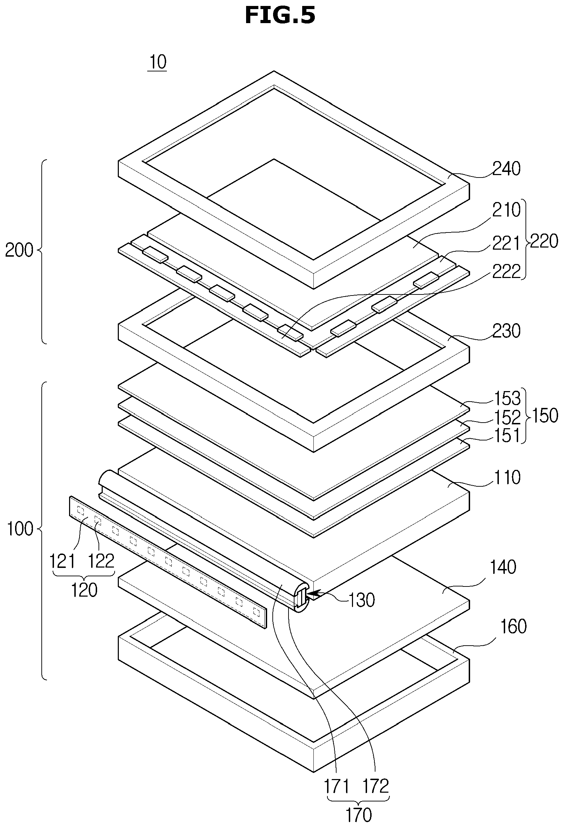

FIG. 5 shows a configuration of a display apparatus according to an embodiment.

As shown in FIG. 5, a display apparatus 10 according to an embodiment may include a backlight unit 100 and a display 200. However, the technical concept of the present disclosure is not limited to the display apparatus 10 shown in FIG. 5, and some components of the display apparatus 10 may be omitted as necessary.

The backlight unit 100 may include a light guide plate 110, a light emitting module 120 disposed along one side of the light guide plate 110 and configured to emit light, a quantum dot filter 130 disposed between the light emitting module 120 and the one side of the light guide plate 110, a reflector member 140 disposed below the light guide plate 110, and at least one optical sheet 150 disposed on the light guide plate 110.

Also, the backlight unit 100 may include a lower cover 160 for accommodating the light guide plate 110, the light emitting module 120, the quantum dot filter 130, and the reflector member 140. Also, the backlight unit 100 may include a heat radiation member 170 coupled with the quantum dot filter 130.

The light guide plate 110 may diffuse incident light to transform it to surface light. When light emitted from the light emitting module 120 is incident to the light guide plate 110, the light guide plate 110 may diffuse the light through total reflection, etc. to transform it to surface light. The light diffused by the light guide plate 110 may be irradiated toward the display 200.

The light guide plate 110 may be made of a transparent material. For example, the light guide plate 110 may include one among acrylic resin such as polymethyl metaacrylate (PMMA), polyethylene terephthalate (PET) resin, poly carbonate (PC) resin, cycloolefin copolymer (COC) resin, and polyethylene naphthalate (PEN) resin.

The light emitting module 120 may be coupled with at least one side of the light guide plate 110.

The light emitting module 120 may include a board 121, and a plurality of light-emitting device packages 122 arranged at regular intervals on the board 121.

The board 121 may include a printed circuit board (PCB) including a circuit pattern for supplying an electrical signal to the light-emitting device packages 122.

The light-emitting device packages 122 may be electrically connected to the circuit pattern formed on the board 121, and operate as a light source of the display apparatus 10. That is, the light-emitting device packages 122 may receive an electrical signal from the circuit pattern of the board 121, convert the electrical signal into an optical signal, and output the optical signal.

Each light-emitting device package 122 may include a light-emitting diode operating as a point light source.

The light-emitting device packages 122 may be positioned on one side of the lower cover 160 or on a heat radiation plate (not shown). In this case, the board 121 for supporting the light-emitting device packages 122 may be omitted.

The quantum dot filter 130, which is a light wavelength converting member, may be positioned between the light-emitting module 120 and the light guide plate 110. The quantum dot filter 130 may be a filter to which the quantum dot composition according to the present disclosure is applied. The quantum dot filter 130 may convert the wavelength of light emitted from the light-emitting module 120 through the Quantum Dot Effect, and emit the light with the converted wavelength to the light guide plate 110. For example, when blue light is irradiated from the light emitting module 120, the quantum dot filter may convert the wavelength of the blue light to emit white light.

Quantum dots generate strong fluorescence in a narrow wavelength band. More specifically, the quantum dots generate light when electrons that have been in a valence band (an unstable (excited) state) fall to a conduction band. The generated fluorescence generates light of a shorter wavelength at smaller particles of the quantum dots, and light of a longer wavelength at larger particles of the quantum dots.

Accordingly, by adjusting the sizes of quantum dots, various wavelengths of light, such as red, green, and blue, may be easily obtained. Since quantum dots have excellent luminescent properties, white light implemented by using quantum dots may provide higher color reproduction of green and red than that implemented by typical white light emitting diodes.

The quantum dot filter 130 may include quantum dots of different sizes according to the kinds of light emitted from the light source and light that is to be converted through the quantum dots. More specifically, quantum dots that are accommodated in the pores of the metal composite in the quantum dot composition may have various sizes according to the kind of light that is to be converted through the quantum dots.

When a light emitting device of emitting blue light is used as a light source and white light needs to be emitted through the quantum dot filter 130, the quantum dot filter 130 to which a quantum dot composition according to the following example is applied may be used.

More specifically, the metal oxide composite of the quantum dot composition may accommodate quantum dots of absorbing light of a blue wavelength band to emit light of a green wavelength band and quantum dots for absorbing light of the blue wavelength band to emit light of a red wavelength band, randomly, in the pores.

Accordingly, when blue light emitted from the light source passes through the quantum dot filter, the quantum dots may absorb the blue light to convert it to light of a green or red wavelength band, and as a result, light of a blue wavelength, light of a green wavelength, and light of a red wavelength may be mixed to emit white light.

Also, since the metal oxide composite is provided in the form of a random raising nano-micro composite, diffused reflection of light may be induced to efficiently improve the quantity of used quantum dots.

Below the light guide plate 110, the reflector member 140 may be positioned.

The reflector member 140 may reflect light incident from the bottom of the light guide plate 110 to direct the light to the light guide plate 110, thereby improving the brightness of the backlight unit 100. The reflector member 140 may be made of a material, such as polyethylene terephthalate (PET), poly carbonate (PC), and poly vinyl chloride (PVC), although not limited thereto.

On the light guide plate 110, at least one optical sheet 150 having light transmission may be positioned. The optical sheet 150 may be used to improve the optical properties of light transferred from the light guide plate 110.

The optical sheet 150 may include a diffuser sheet 151, a prism sheet 152, and a protective sheet 153.

The diffuser sheet 151 may diffuse light incident from the light emitting module 120 such that the light is uniformly distributed over a wide range, and irradiate the diffused light to the display panel 210.

The prism sheet 152 may perform a function of deflecting obliquely incident light among light incident to the prism sheet 152 to cause the light to exit perpendicularly. At least two prism sheets 152 may be positioned between the display panel 210 and the diffuser sheet 151 to deflect the direction of light exiting the diffuser sheet 151 to a perpendicular direction.

The protective sheet 152 may protect the lower plates against contamination such as water. Also, the protective sheet 153 may prevent the Moire effect, and widen a viewing angle.

Below the reflective member 140, the lower cover 160 may be positioned.

The lower cover 160 may be made of a metal, etc., and formed in the shape of a box whose upper part opens. For example, the lower cover 160 may be formed by bending or curving a metal plate or the like.

In an inside space of the lower cover 160 formed by bending or curving, the light emitting module 120, the light guide plate 110, the quantum dot filter 130, and the reflector member 140 may be accommodated. Also, the lower cover 160 may support the optical sheet 150 and the display 200.

The display 200 may include a display panel 210 and a driving circuit portion 220. Also, the display 200 may further include a panel guide 230 for supporting the display panel 210, and an upper case 240 surrounding the edges of the display panel 210 and coupled with the panel guide 230.

One side of the display panel 210 may be connected to the driving circuit portion 220. The driving circuit portion 220 may include a printed circuit board 221 for supplying scan signals to the gate lines of a thin film transistor substrate, and a printed circuit board 222 for supplying data signals to the data lines.

Meanwhile, the display apparatus 10 to which the quantum dot filter 130 is applied may have excellent color reproducibility, whereas the display apparatus 10 may have a problem that the quantum dot filter 130 deteriorates due to high temperature. Accordingly, when the quantum dot filter 130 including quantum dots is positioned adjacent to the light-emitting module 120 in the backlight unit 100, the life cycle of the quantum dot filter 130 may be shortened.

According to the embodiments of the present disclosure, at least one heat radiation member 170 may be further provided to improve the deterioration of the quantum dot filter 120 due to high temperature. For example, as shown in FIG. 3, heat radiation members 171 and 172 may be respectively installed above and below the quantum dot filter 130. The heat radiation member 170 may protect the quantum dot filter 130 against heat emitted from the light-emitting module 120.

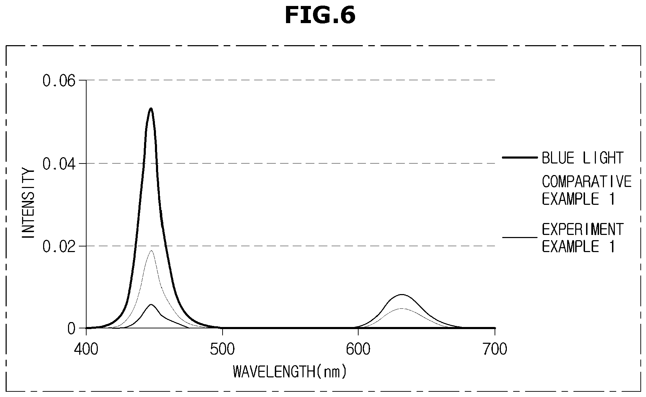

In FIG. 6, a case in which the quantum dot composition according to the present disclosure is applied to a quantum dot filter of an edge type display is shown as an example. However, the technical concept of the present disclosure is not limited to the above-described example, and the quantum dot composition according to the present disclosure may be applied in another form.

The quantum dot composition may be applied as pattern ink for forming the pattern of the light guide plate 110, or as coating ink for coating one surface of the reflector member 140. Also, as described above, the quantum dot composition may be applied on the optical lens provided around the light emitting device packages 122 of the light emitting module 120.

So far, an example of a display apparatus to which the quantum dot composition according to the present disclosure is applied has been described.

Now, for easy understanding, illumination experiment results for quantum dots to which the random raising barrier according to the present disclosure is applied and quantum dots to which the random raising barrier according to the present disclosure is not applied will be described.

In Experiment Example 1, a test piece was prepared by impregnating quantum dots in the pores of a metal oxide composite having a diameter of 1000 µm or less, adding a binder, and then hardening the binder. Then, blue light was irradiated on the test piece.

In Comparative Example 1, a test piece was prepared by impregnating quantum dots in the pores of a metal oxide composite having a diameter of 40 µm to 63 µm, adding a binder, and then hardening the binder. Then, blue light was irradiated on the test piece.

Optical wavelength experiment results of blue light are shown in Table 1, below.

**[Table 1]**

| Condition | CIE | | Lumen (lm) |
|---|---|---|---|
| | Cx | Cy | |
| Experiment Example 1 | 0.156 | 0.022 | 58.2 |
| Comparative Example 1 | 0.241 | 0.068 | 45.0 |
| Blue Light | 0.422 | 0.165 | 33.5 |

As seen from Table 1, it is confirmed that in Experiment Example 1, lumen corresponding to luminous flux is improved by about 1.8 times compared to Comparative Example 1.

Also, it is confirmed that in Experiment Example 1 in which a metal oxide composite of 1000 µm or less is used, blue light is more stably converted to red light compared to Comparative Example 1, and as a result, light efficiency is improved.

While the present disclosure has been particularly described with reference to exemplary embodiments, it should be understood by those of skilled in the art that various changes in form and details may be made without departing from the spirit and scope of the present disclosure.

## Claims

1. A quantum dot composition comprising a metal oxide composite, wherein quantum dots are impregnated in pores formed in a surface of the metal oxide composite,
wherein the metal oxide composite has a size of a Mie scattering range with respect to blue light.

2. The quantum dot composition of claim 1, wherein the metal oxide composite has a size of 100 nm to 1000 nm.

3. The quantum dot composition of claim 1, wherein the metal oxide composite comprises at least one metal oxide selected from among a metal oxide group including titanium oxide (TiO₂), aluminum oxide (Al₂O₃), zinc oxide (ZnO), silicon dioxide (SiO₂), chrome oxide (CrO), zirconium oxide (ZrO₂), iron oxide (Fe₃O₄), calcium oxide (CaO), tungsten dioxide (WO₂), tellurium dioxide (TeO₂), magnesium oxide (MgO), tin oxide (SnO), titanium oxide (TiO), zinc oxide (Ag₂O), cobalt oxide (CoO), nickel oxide (NiO), and aluminum oxide (AlO).

4. The quantum dot composition of claim 1, wherein polymer coating films are formed on surfaces of the quantum dots.

5. The quantum dot composition of claim 1, wherein the pores of the metal oxide composite have a volume ratio of 5 to 65 with respect to a total volume of the metal oxide composite, and
the pores of the metal oxide composite have an average diameter of 10 nm to 800 nm.

6. The quantum dot composition of claim 1, wherein the quantum dots impregnated in the pores of the metal oxide composite have a portion of 0.5 weight% to 65 weight% with respect to 100 weight% of a total matrix.

7. The quantum dot composition of claim 1, wherein the quantum dot composition is formed by preparing a metal oxide composite with pores formed in the surface, coating the quantum dots, impregnating the coated quantum dots in the pores of the metal oxide composite, and coating the metal oxide composite.

8. A method of forming a quantum dot composition, comprising:
preparing a metal oxide composite with pores formed in the surface;
coating quantum dots;
impregnating the coated quantum dots in the pores of the metal oxide composite; and
coating the metal oxide composite.

9. The method of claim 8, wherein the preparing of the metal oxide composite with the pores formed in the surface comprises preparing a metal oxide composite having a size of a Mie scattering range with respect to blue light.

10. The method of claim 8, wherein the preparing of the metal oxide composite with the pores formed in the surface comprises preparing a metal oxide composite made of at least one metal oxide selected from among a metal oxide group including titanium oxide (TiO₂), aluminum oxide (Al₂O₃), zinc oxide (ZnO), silicon dioxide (SiO₂), chrome oxide (CrO), zirconium oxide (ZrO₂), iron oxide (Fe₃O₄), calcium oxide (CaO), tungsten dioxide (WO₂), tellurium dioxide (TeO₂), magnesium oxide (MgO), tin oxide (SnO), titanium oxide (TiO), zinc oxide (Ag₂O), cobalt oxide (CoO), nickel oxide (NiO), and aluminum oxide (AlO).

11. The method of claim 8, wherein the coating of the quantum dots comprises providing the quantum dots in an organic solvent including polymers to form polymer coating films on surfaces of the quantum dots, and
the impregnating of the coated quantum dots in the pores of the metal oxide composite comprises adding the coated quantum dots and the metal oxide composite in a pre-prepared solvent and stirring the solvent.

12. The method of claim 11, further comprising drying the solvent to collect the metal oxide composite in which the quantum dots are impregnated.

13. The method of claim 8, wherein the coating of the metal oxide composite comprises:
forming an organic coating film on a surface of oxide powder; and
forming an inorganic coating film on the surface of the oxide powder on which the organic coating film is formed.

14. A display apparatus to which the quantum dot composition of claims 1 to 7 is applied.

15. The display apparatus of claim 14, comprising:
a backlight unit; and
a sheet,
wherein the quantum dot composition is applied to at least one of the sheet and a light guide plate pattern of the backlight unit.
